# EUROPÄISCHE PATENTSCHRIFT

(11) **EP 1 528 833 B1**
(45) Veröffentlichungstag und Bekanntmachung des Hinweises auf die Patenterteilung: **12.12.2007**
(21) Anmeldenummer: 03405775.2
(22) Anmeldetag: 28.10.2003
(51) Int. Cl.: H04Q 7/38

(54) **Verfahren zur Selektion eines Verschlüsselungsalgorithmus sowie dafür geeignetes Mobilendgerät**
Method for selecting an encryption algorithm, and mobile terminal suitable therefor
Procédé de sélection d'un algorithme de chiffrage et terminal mobile adapté à ce procédé

(43) Veröffentlichungstag der Anmeldung: 04.05.2005
(73) Patentinhaber: Swisscom Mobile AG, 3050 Bern (CH)
(72) Erfinder: Oswald, Rudolf, 3014 Bern (CH)
(74) Vertreter: Vogel, Dany

(56) Entgegenhaltungen:
- EP-A- 1 005 244
- EP-A- 1 045 567
- WO-A-01/89253
- US-A- 5 978 669

## Beschreibung

### Technisches Gebiet

Die vorliegende Erfindung betrifft ein Verfahren zur Selektion eines Verschlüsselungsalgorithmus sowie ein dafür geeignetes Mobilendgerät. Die Erfindung betrifft insbesondere ein Verfahren zur Selektion eines Verschlüsselungsalgorithmus beim Anbinden eines Mobilendgeräts an ein Mobilfunknetz sowie ein dafür geeignetes Mobilendgerät für Mobilfunknetze.

### Stand der Technik

In den Mobilfunknetzen für die mobile Daten- und Sprachkommunikation wird die Kommunikation zwischen einem mobilen Kommunikationsendgerät (Mobilendgerät) und dem betreffenden Mobilfunknetz typischerweise mittels kryptographischen Verschlüsselungsalgorithmen verschlüsselt. Beim Anbinden des Mobilendgeräts an das Mobilfunknetz wird zwischen dem Mobilendgerät und dem Mobilfunknetz der Verschlüsselungsalgorithmus bestimmt, der für die Verschlüsselung der Daten- und Sprachkommunikation verwendet werden soll. Die Bestimmung des zu verwendenden Verschlüsselungsalgorithmus wird beispielsweise für GSM-Mobilfunknetze (Global System for Mobile Communication) in der Schrift "Technical Specification, 3rd Generation Partnership Project, Technical Specification Group Services and System Aspects, Security Related Network Functions (Release 5)", 3GPP TS 43.020 V5.0.0, Juli 2002, von 3GPP Support Office, 650 Route des Lucioles, Sophia Antipolis, Valbonne, Frankreich, oder in der internationalen Patentanmeldung WO 01/89253, spezifiziert. Zur Bestimmung des Verschlüsselungsalgorithmus wird beim Anbinden des Mobilendgeräts an ein Mobilfunknetz vom Mobilendgerät eine Datenmeldung, eine so genannte Classmark-Change-Meldung, vom Mobilendgerät an das Mobilfunknetz übermittelt. Die Classmark-Change-Meldung umfasst Informationen zur Identifizierung der Verschlüsselungsalgorithmen, die vom Mobilendgerät unterstützt werden. In GSM-Mobilfunknetzen werden höchstens sieben so genannte A5-Algorithmen zur Kommunikationsverschlüsselung unterstützt. Das Mobilfunknetz selektiert auf Grund der in der empfangenen Classmark-Change-Meldung enthaltenen Informationen den zu verwendenden Verschlüsselungsalgorithmus. Das Mobilfunknetz informiert das Mobilendgerät über die zu verwendenden Verschlüsselungsalgorithmen mittels einer speziellen Datenmeldung, einer so genannten Cipher-Mode-Command-Meldung. Das Mobilendgerät verwendet zur Kommunikationsverschlüsselung den in der Cipher-Mode-Command-Meldung angegebenen Verschlüsselungsalgorithmus sowie einen kryptographischen Schlüssel. Der kryptographische Schlüssel wird im Mobilendgerät, insbesondere in einem Identifizierungsmodul des Mobilendgeräts, aus einer Zufallszahl (RAND) generiert, die vom Mobilfunknetz in einer so genannten Authentication-Request-Meldung an das Mobilendgerät übermittelt wurde. Das Identifizierungsmodul, ein so genanntes SIM (Subscriber Identity Module), ist als Chipkarte ausgeführt, die ins Mobilendgerät eingefügt und entfernbar mit dem Mobilendgerät verbunden ist. Der kryptographische Schlüssel ist unabhängig vom selektierten Verschlüsselungsalgorithmus, das heisst, für alle Verschlüsselungsalgorithmen wird der gleiche kryptographische Schlüssel verwendet. Dadurch besteht die Gefahr, dass Meldungen, die mit einem starken Verschlüsselungsalgorithmus verschlüsselt wurden, von einem Unberechtigten entschlüsselt werden können, wenn dieser Unberechtigte den kryptographischen Schlüssel über die Entschlüsselung einer mit einem schwächeren Verschlüsselungsalgorithmus verschlüsselten Meldung ermittelt hat. Dieses Problem könnte gelöst werden, wenn der generierte kryptographische Schlüssel nur einem bestimmten der Verschlüsselungsalgorithmen zugeordnet würde. Der Nachteil dieser Lösung besteht jedoch darin, dass bei der Generierung der Zufallszahl im Mobilfunknetz bereits bekannt sein muss, welchen Verschlüsselungsalgorithmus das Mobilendgerät und das Mobilfunknetz gemeinsam unterstützen und verwenden.

### Darstellung der Erfindung

Es ist eine Aufgabe der vorliegenden Erfindung, ein neues Verfahren zur Selektion eines Verschlüsselungsalgorithmus beim Anbinden eines Mobilendgeräts an ein Mobilfunknetz sowie ein dafür geeignetes Mobilendgerät für Mobilfunknetze vorzuschlagen, welche nicht die Nachteile des Stands der Technik aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Zur Selektion eines Verschlüsselungsalgorithmus beim Anbinden eines Mobilendgeräts an ein Mobilfunknetz, wird eine erste Datenmeldung, die Informationen zur Identifizierung der Verschlüsselungsalgorithmen umfasst, die vom Mobilendgerät unterstützt werden, vom Mobilendgerät an das Mobilfunknetz übermittelt. Im Mobilfunknetz wird aus den Verschlüsselungsalgorithmen, die durch das Mobilendgerät unterstützt werden, ein zu verwendender Verschlüsselungsalgorithmus selektiert. Das Mobilfunknetz übermittelt eine zweite Datenmeldung, die eine Identifizierung des selektierten zu verwendenden Verschlüsselungsalgorithmus umfasst, an das Mobilendgerät.

Die oben genannten Ziele werden durch die vorliegende Erfindung insbesondere dadurch erreicht, dass die Identifizierung des zu verwendenden Verschlüsselungsalgorithmus im Mobilendgerät in einem Datenspeicher zugeordnet zu Informationen zur Identifizierung des Mobilfunknetzes gespeichert wird und dass bei einer nachfolgenden Anbindung des Mobilendgeräts an das Mobilfunknetz überprüft wird, ob die im Datenspeicher gespeicherte Identifizierung des zu verwendenden Verschlüsselungsalgorithmus mit der in der zweiten Datenmeldung vom Mobilfunknetz an das Mobilendgerät übermittelten Identifizierung des selektierten zu verwendenden Verschlüsselungsalgorithmus übereinstimmt. Durch die Speicherung des zu verwendenden Verschlüsselungsalgorithmus im Mobilendgerät zugeordnet zum betreffenden Mobilfunknetz, kann die Verschlüsselung im betreffenden Mobilfunknetz durch das Mobilendgerät auf einen gemeinsam unterstützten Verschlüsselungsalgorithmus beschränkt werden. Dadurch wird verhindert, dass ein Unberechtigter, der beispielsweise eine Basisstation eines Mobilfunknetzes simuliert, auf einen anderen Verschlüsselungsalgorithmus umschalten kann.

Vorzugsweise wird die Identifizierung des zu verwendenden Verschlüsselungsalgorithmus zunächst in einem ersten Datenspeicher im Mobilendgerät zwischengespeichert. Im Mobilendgerät wird überprüft, ob im Mobilendgerät eine vom Mobilfunknetz empfangene Meldung unter Verwendung der im ersten Datenspeicher zwischengespeicherten Informationen erfolgreich entschlüsselt wurde und die Identifizierung des zu verwendenden Verschlüsselungsalgorithmus wird erst nach erfolgreicher Entschlüsselung in einem zweiten Datenspeicher im Mobilendgerät gespeichert. Bei der nachfolgenden Anbindung des Mobilendgeräts an das Mobilfunknetz wird überprüft, ob die in der zweiten Datenmeldung vom Mobilfunknetz an das Mobilendgerät übermittelte Identifizierung des selektierten zu verwendenden Verschlüsselungsalgorithmus mit der im zweiten Datenspeicher gespeicherten Identifizierung des zu verwendenden Verschlüsselungsalgorithmus übereinstimmt. Dadurch dass die Identifizierung des zu verwendenden Verschlüsselungsalgorithmus erst nach erfolgreicher Entschlüsselung der ersten vom Mobilfunknetz empfangenen Meldung im zweiten Datenspeicher gespeichert wird, wird durch das Mobilendgerät die Authentizität des neuen Mobilfunknetzes überprüft, an das sich das Mobilendgerät anbindet.

Vorzugsweise werden die im Datenspeicher gespeicherten Informationen zu einem Zeitpunkt gelöscht, der durch definierte Kriterien bestimmt wird. Der Zeitpunkt zum Löschen der im Datenspeicher gespeicherten Informationen, insbesondere der Identifizierung des zu verwendenden Verschlüsselungsalgorithmus, wird beispielsweise durch eine definierte Anzahl Powerzyklen oder Ladezyklen bestimmt. Dadurch, dass die im Datenspeicher gespeicherten Informationen vom Mobilendgerät von Zeit zu Zeit automatisch gelöscht werden, wird ermöglicht, dass stärkere, das heisst sicherere, Verschlüsselungsalgorithmen verwendet werden können, die zwar vom Mobilendgerät unterstützt, aber im Mobilfunknetz erst neu verfügbar geworden sind.

Vorzugsweise wird vor der Übermittlung der ersten Datenmeldung vom Mobilendgerät an das Mobilfunknetz im Mobilendgerät auf Grund der im Datenspeicher gespeicherten Informationen zur Identifizierung des Mobilfunknetzes überprüft, ob sich das Mobilendgerät an ein anderes neues Mobilfunknetz anbindet. Wenn sich herausstellt, dass sich das Mobilendgerät an ein anderes neues Mobilfunknetz anbindet, werden bei der Übermittlung der ersten Datenmeldung vom Mobilendgerät an das neue Mobilfunknetz in der ersten Datenmeldung sämtliche verfügbaren Verschlüsselungsalgorithmen als vom Mobilendgerät unterstützt angegeben. Darauf folgend wird beim Empfang der zweiten Datenmeldung im Mobilendgerät überprüft, ob der vom neuen Mobilfunknetz selektierte zu verwendende Verschlüsselungsalgorithmus vom vorher verwendeten Verschlüsselungsalgorithmus abweicht. Wenn keine Abweichung vorliegt, kann der vom neuen Mobilfunknetz selektierte zu verwendende Verschlüsselungsalgorithmus im Datenspeicher gefahrlos dem neuen Mobilfunknetz zugeordnet gespeichert werden. Wie bereits oben stehend beschrieben wurde, wird beim Anbinden des Mobilendgeräts an ein Mobilfunknetz vom Mobilfunknetz eine Datenmeldung, eine so genannte Authentication-Request-Meldung, an das Mobilendgerät übermittelt, welche Daten zur Erzeugung eines kryptographischen Schlüssels umfasst. Vorzugsweise wird bei der Speicherung der Identifizierung des zu verwendenden Verschlüsselungsalgorithmus auch der erzeugte kryptographische Schlüssel im Datenspeicher zugeordnet zu den Informationen zur Identifizierung des Mobilfunknetzes gespeichert. Wenn der vom neuen Mobilfunknetz selektierte zu verwendende Verschlüsselungsalgorithmus vom vorher verwendeten Verschlüsselungsalgorithmus abweicht, wird im Mobilendgerät überprüft, ob ein neuer kryptographischer Schlüssel, der aus einer vom neuen Mobilfunknetz empfangenen dritten Datenmeldung erzeugt wurde, mit dem im Datenspeicher vorher gespeicherten kryptographischen Schlüssel übereinstimmt und gegebenenfalls beispielsweise eine Fehlermeldung generiert. Andernfalls, wenn der neue kryptographische Schlüssel vom vorher gespeicherten Schlüssel abweicht, kann der neue kryptographische Schlüssel und der vom neuen Mobilfunknetz selektierte zu verwendende Verschlüsselungsalgorithmus im Datenspeicher gefahrlos dem neuen Mobilfunknetz zugeordnet gespeichert werden. Folglich wird beim Anbinden an ein neues Mobilfunknetz zwar ein anderer Verschlüsselungsalgorithmus zugelassen, jedoch nur, wenn auch ein neuer kryptographischer Schlüssel verwendet wird. Dadurch wird verhindert, dass ein Unberechtigter auf einen anderen Verschlüsselungsalgorithmus wechseln und einen vorher ermittelten, bereits verwendeten kryptographischen Schlüssel zur Verwendung einführen kann.

In einer alternativen, weniger bevorzugten Ausführungsvariante wird bei der Übermittlung der ersten Datenmeldung vom Mobilendgerät an das neue Mobilfunknetz in der ersten Datenmeldung nur der zuletzt verwendete Verschlüsselungsalgorithmus als vom Mobilendgerät unterstützt angegeben, wenn sich herausstellt, dass sich das Mobilendgerät an ein anderes neues Mobilfunknetz anbindet. Beim Empfang der zweiten Datenmeldung im Mobilendgerät wird dann überprüft, ob der vom neuen Mobilfunknetz selektierte zu verwendende Verschlüsselungsalgorithmus vom zuletzt verwendeten Verschlüsselungsalgorithmus abweicht und gegebenenfalls beispielsweise eine Fehlermeldung generiert. Durch die Beschränkung der Verschlüsselung auf den zuletzt verwendeten Verschlüsselungsalgorithmus wird auch verhindert, dass ein Unberechtigter auf einen anderen Verschlüsselungsalgorithmus umschalten kann. Allerdings wird ein Wechsel zu einem stärkeren Verschlüsselungsalgorithmus, der sowohl im Mobilendgerät als auch im neuen Mobilfunknetz verfügbar wäre, verhindert, bis die im Datenspeicher gespeicherte Identifizierung des zu verwendenden Verschlüsselungsalgorithmus gelöscht wird.

Vorzugsweise wird die Identifizierung des zu verwendenden Verschlüsselungsalgorithmus in einem Datenspeicher gespeichert, der auf einem Identifizierungsmodul ausgeführt ist, das in das Mobilendgerät eingeführt und entfernbar mit dem Mobilendgerät verbunden ist. Verschiedene Benutzer mit verschiedenen Identifizierungsmodulen können sich so beispielsweise unbeeinflusst von der vorherigen Benutzung des Mobilendgeräts individuell an Mobilfunknetze anbinden, zum Beispiel mit verschiedenen verfügbaren Verschlüsselungsalgorithmen.

In einer alternativen Ausführungsvariante wird die Identifizierung des zu verwendenden Verschlüsselungsalgorithmus in einem fest mit dem Mobilendgerät verbundenen Datenspeicher gespeichert und die im Datenspeicher gespeicherten Informationen werden beim Verbinden eines neuen Identifizierungsmoduls mit dem Mobilendgerät gelöscht. Durch das Löschen der im Datenspeicher gespeichertem Informationen, insbesondere der gespeicherten Identifizierung des zu verwendenden Verschlüsselungsalgorithmus, wird verhindert, dass verschiedene Benutzer mit verschiedenen Identifizierungsmodulen durch vorherige Benutzung des Mobilendgeräts beeinflusst werden.

In einer Ausführungsvariante wird bei der Speicherung der Identifizierung des zu verwendenden Verschlüsselungsalgorithmus mit den Informationen zur Identifizierung des Mobilfunknetzes zusätzlich ein Zugriffstechnologie-Typ des Mobilfunknetzes im Datenspeicher gespeichert. Dadurch ist es möglich, in einem Mobilfunknetz, das verschiedene Typen von Zugriffstechnologien unterstützt, beispielsweise GSM oder UMTS, unterschiedliche Anforderungen der verschiedenen Zugriffstechnologien zu berücksichtigen. Zum Beispiel kann im gleichen Mobilfunknetz der selbe kryptographische Schlüssel mehrfach verwendet werden, auch wenn der Verschlüsselungsalgorithmus geändert hat, wenn nämlich der Verschlüsselungsalgorithmus auf Grund eines Wechsels der Zugriffstechnologie von GSM auf UMTS geändert hat.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch ein mobiles Kommunikationsendgerät mit einem Identifizierungsmodul darstellt, welche mit einem Mobilfunknetz kommunizieren.
Figur 2 zeigt ein Zeitdiagramm, das schematisch den Austausch von Datenmeldungen beim Anbinden eines mobilen Kommunikationsendgeräts an ein Mobilfunknetz gemäss dem Stand der Technik illustriert.
Figur 3 zeigt ein Zeitdiagramm, das schematisch den Verfahrensablauf für die Selektion eines Verschlüsselungsalgorithmus bei der erneuten Anbindung eines mobilen Kommunikationsendgeräts an das selbe Mobilfunknetz darstellt.
Figur 4a zeigt ein Zeitdiagramm, das schematisch den Verfahrensablauf für die Selektion eines Verschlüsselungsalgorithmus bei der Anbindung eines mobilen Kommunikationsendgeräts an ein neues Mobilfunknetz darstellt.
Figur 4b zeigt ein Zeitdiagramm, das schematisch den Verfahrensablauf für die Selektion eines Verschlüsselungsalgorithmus bei der Anbindung eines mobilen Kommunikationsendgeräts an ein neues Mobilfunknetz darstellt, wobei auch zwischen unterschiedlichen Zugriffstechnologien unterschieden wird.
Figur 5 zeigt ein Zeitdiagramm, das schematisch den Verfahrensablauf gemäss einer alternativen Ausführungsvariante für die Selektion eines Verschlüsselungsalgorithmus bei der Anbindung eines mobilen Kommunikationsendgeräts an ein neues Mobilfunknetz darstellt.

### Wege zur Ausführung der Erfindung

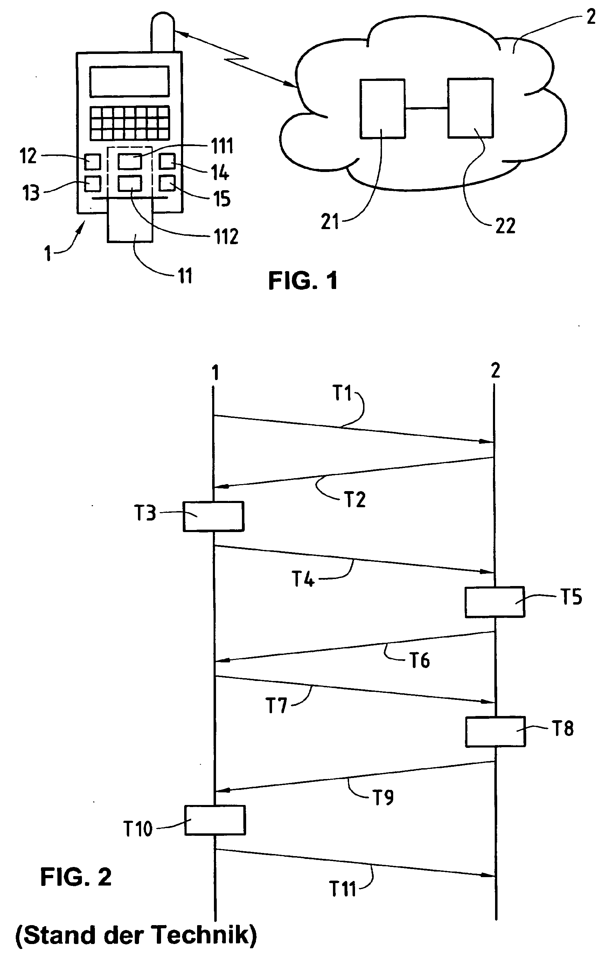

In den Figuren 1 bis 5 bezeichnen gleiche Bezugszeichen Schritte oder Komponenten, die einander entsprechen.

In der Figur 1 bezeichnet das Bezugszeichen 1 ein mit dem Mobilfunknetz 2 verbindbares mobiles Kommunikationsendgerät, ein Mobilendgerät. Das Mobilfunknetz umfasst beispielsweise ein GSM- oder ein UMTS-Mobilfunknetz oder ein anderes, beispielsweise satellitenbasiertes Mobilfunknetz, oder ein drahtloses lokales Netzwerk, ein so genanntes WLAN (Wireless Local Area Network). Das Mobilendgerät 1 ist ein Mobilfunktelefon oder ein Laptop- oder PDA-Computer (Personal Digital Assistant) mit einem Kommunikationsmodul für die Kommunikation über das Mobilfunknetz 2. Das Mobilfunknetz 2 umfasst zudem eine computerbasierte Zugangskontrolleinheit 21 und eine damit verbundene computerbasierte Authentifizierungszentrale 22. Die Zugangskontrolleinheit 21 ist vorzugsweise eine VLR-Einheit (Visitor Location Register) oder eine SGSN-Einheit (Serving GPRS Support Node, GPRS - General Packet Radio Service) für ein GSM- oder UMTS-Mobilfunknetz. Die Authentifizierungszentrale 22 ist vorzugsweise eine AuC-Einheit (Authentication Centre) für ein GSM- oder UMTS-Mobilfunknetz.

Das Mobilendgerät 1 umfasst einen Datenspeicher 111 und einen weiteren, nachfolgend als Zwischenspeicher 112 bezeichneten Datenspeicher. Der Datenspeicher 111 und/oder der Zwischenspeicher 112 sind entweder fest im Mobilendgerät 1 oder auf einem Identifizierungsmodul 11 ausgeführt, das in das Mobilendgerät 1 eingeführt ist und mit dem Mobilendgerät 1 entfernbar verbunden ist. Das Identifizierungsmodul 11, ein so genanntes SIM oder USIM (UMTS Subscriber Identity Module) ist vorzugsweise als Chipkarte ausgeführt. In der bevorzugten Ausführungsvariante sind der Datenspeicher 111 und der Zwischenspeicher 112 eingerichtet, Informationen zur Identifizierung eines Mobilfunknetzes, eine Identifizierung eines Verschlüsselungsalgorithmus (z.B. ein so genannter A5-Algorithmus) und einen kryptographischen Schlüssel (KC) zu speichern, wie in der Tabelle 1 schematisch dargestellt ist. Anstelle des kryptographischen Schlüssels kann auch eine Zufallszahl (RAND) zur Erzeugung des kryptographischen Schlüssels gespeichert werden. Die Informationen zur Identifizierung eines Mobilfunknetzes umfassen vorzugsweise einen Ländercode, beispielsweise ein so genannter Mobile Country Code (MCC), einen Netzcode, beispielsweise ein so genannter Mobile Network Code (MNC), und, je nach Ausführungsvariante optional einen Zugriffstechnologie-Typ, das heisst ein so genannter Access Technology Type (ATT). Die Speicherung des Zugriffstechnologie-Typs ist für Mobilendgeräte 1 sinnvoll, die verschiedene Typen von Zugriffstechnologien unterstützen, beispielsweise Mobilendgeräte 1, die GSM- und UMTS-Zugriffstechnologien unterstützen.

**Tabelle 1**

| | | | | |
|---|---|---|---|---|
| Identifizierung eines Mobilfunknetzes | | | Identifizierung eines Verschlüsselungsalgorithmus (A5) | Kryptographischer Schlüssel (K_{C}) |
| MCC | MNC | ATT | | |

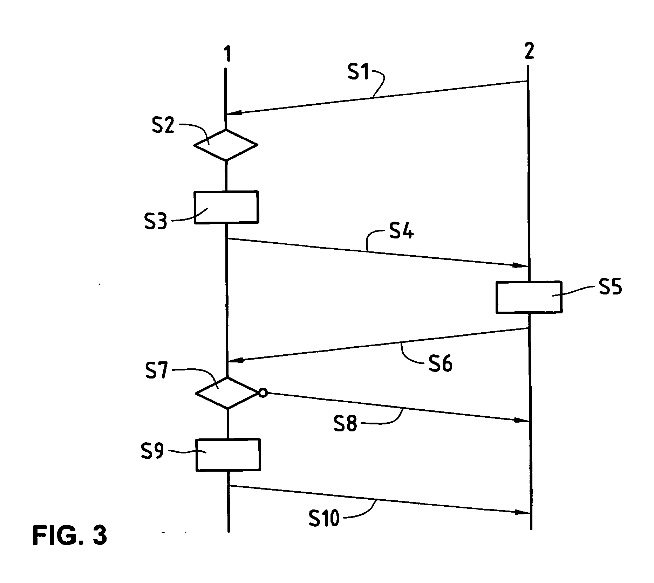

Wie in der Figur 1 schematisch dargestellt ist, umfasst das Mobilendgerät 1 zudem mehrere funktionale Module 12, 13, 14 und 15 zur Ausführung der später mit Bezug auf die Figuren 3, 4a, 4b und 5 beschriebenen Funktionen. Die funktionalen Module 12, 13, 14 und 15 sind vorzugsweise als programmierte Softwaremodule zur Steuerung eines oder mehrerer Prozessoren des Mobilendgeräts 1 ausgeführt. Der Fachmann wird verstehen, dass die funktionalen Module 12, 13, 14 und 15 auch vollständig oder zumindest teilweise hardwaremässig ausgeführt sein können. Die funktionalen Module 12, 13, 14 und 15 können fest im Mobilendgerät 1 oder auf dem Identifizierungsmodul 11 gespeichert sein.

Mit Bezug auf die Figur 2 wird der standardgemässe Datenaustausch zwischen dem Mobilendgerät 1 und dem Mobilfunknetz 2, insbesondere mit der Zugangskontrolleinheit 21, beim Anbinden des Mobilendgeräts 1 an das Mobilfunknetz 2 beschrieben. Wie in der Figur 2 dargestellt ist, ist das Mobilendgerät 1 eingerichtet, beim Anbinden an das Mobilfunknetz 2 im Schritt T1 eine so genannte Location-Update-Request-Datenmeldung an das Mobilfunknetz 2 zu übermitteln. Im Schritt T2 empfängt das Mobilendgerät vom Mobilfunknetz 2 eine so genannte Authentication-Request-Datenmeldung, die Daten, insbesondere eine Zufallszahl (RAND) zur Erzeugung eines kryptographischen Schlüssels (K_{C}) umfasst. Die Zufallszahlen werden in der Authentifizierungszentrale 22 erzeugt. Das Identifizierungsmodul 11 des Mobilendgeräts 1 ist eingerichtet, im Schritt T3 aus der Zufallszahl den kryptographischen Schlüssel zu generieren und abzuspeichern und eine Authentication-Response-Datenmeldung vorzubereiten. Das Mobilendgerät 1 ist eingerichtet, die vorbereitete Authentication-Response-Datenmeldung im Schritt T4 an das Mobilfunknetz 2 zu übermitteln. Die Korrektheit der empfangenen Authentication-Response-Datenmeldung wird im Schritt T5 im Mobilfunknetz, insbesondere in der Zugangskontrolleinheit 21, geprüft. Bei positiver Überprüfung übermittelt das Mobilfunknetz 2 im Schritt T6 eine so genannte Classmark-Enquiry-Datenmeldung an das Mobilendgerät 1. Das Mobilendgerät 1 ist eingerichtet, im Schritt T7 als Antwort auf die Classmark-Enquiry-Datenmeldung eine Classmark-Change-Datenmeldung an das Mobilfunknetz zu übermitteln. Die Classmark-Change-Datenmeldung umfasst Informationen zur Identifizierung von Verschlüsselungsalgorithmen, die vom Mobilendgerät 1 unterstützt werden. In GSM-Mobilfunknetzen werden beispielsweise maximal sieben verschiedene Verschlüsselungsalgorithmen (A5/1, A5/2, ..., A5/7) und die unverschlüsselte Kommunikation unterstützt. Im Schritt T8 selektiert das Mobilfunknetz 2, insbesondere die Zugangskontrolleinheit 21, aus den Verschlüsselungsalgorithmen, die gemeinsam vom Mobilendgerät 1 und vom Mobilfunknetz 2 unterstützt werden, den zu verwendenden Verschlüsselungsalgorithmus. Im Schritt T9 übermittelt das Mobilfunknetz 2 eine so genannte Ciphering-Mode-Command-Datenmeldung an das Mobilendgerät 1. Die Ciphering-Mode-Command-Datenmeldung umfasst eine Identifizierung des zu verwendenden Verschlüsselungsalgorithmus. Das Mobilendgerät 1 ist eingerichtet, im Schritt T10 unter Verwendung des im Schritt T3 generierten kryptographischen Schlüssels und des im Schritt T9 angegebenen zu verwendenden Verschlüsselungsalgorithmus eine so genannte Ciphering-Mode-Complete-Datenmeldung bereitzustellen und im Schritt T11 an das Mobilfunknetz 2 zu übermitteln.

Wie in den Figuren 3, 4a, 4b und 5 dargestellt ist, ist das Mobilendgerät 1, insbesondere das funktionale Modul 12 des Mobilendgeräts 1, eingerichtet, im Schritt S2 zu überprüfen, ob sich das Mobilendgerät 1 erneut an das selbe Mobilfunknetz 2 anbindet oder ob es sich an ein anderes neues Mobilfunknetz 2 anbindet. Das Mobilendgerät 2 bindet sich an ein anderes neues Mobilfunknetz 2 an, wenn die Informationen zur Identifizierung des Mobilfunknetzes, die im Datenspeicher 111 gespeichert sind, nicht mit den empfangenen Informationen zur Identifizierung des Mobilfunknetzes 2 übereinstimmen, an das sich das Mobilgerät 1 anbindet. Andernfalls, wenn die im Datenspeicher 111 gespeicherten Informationen zur Identifizierung eines Mobilfunknetzes mit den empfangenen Informationen zur Identifizierung des Mobilfunknetzes 2, an das sich das Mobilgerät 1 anbindet, übereinstimmen, bindet sich das Mobilendgerät 1 erneut an das selbe Mobilfunknetz 2 an.

In den folgenden Abschnitten wird mit Bezug auf die Figur 3 der Verfahrensablauf für die Selektion eines Verschlüsselungsalgorithmus bei der erneuten Anbindung des Mobilendgeräts 1 an das selbe Mobilfunknetz 2 beschrieben.

Das Mobilendgerät 1, insbesondere das funktionale Modul 13 des Mobilendgeräts 1, ist eingerichtet, bei der erneuten Anbindung des Mobilendgeräts 1 an das selbe Mobilfunknetz 2 im Schritt S3 dem Datenspeicher 111 die gespeicherte Identifizierung des Verschlüsselungsalgorithmus zu entnehmen. Das heisst, im Schritt S3 wird die Identifizierung des Verschlüsselungsalgorithmus bestimmt, der vom Mobilendgerät 1 schon vorher im Mobilfunknetz 2 verwendet wurde.

Im Schritt S4 übermittelt das funktionale Modul 13 des Mobilendgeräts 1 die im Schritt S3 bestimmte Identifizierung des Verschlüsselungsalgorithmus mittels einer Classmark-Change-Datenmeldung an das Mobilfunknetz 2. Zusätzlich kann die im Schritt S4 übermittelte Classmark-Change-Datenmeldung auch angeben, dass das Mobilendgerät 2 auch unverschlüsselte Kommunikation unterstützt.

Im Schritt S5 selektiert das Mobilfunknetz 2 auf Grund der im Schritt S4 übermittelten Classmark-Change-Datenmeldung den zu verwendenden Verschlüsselungsalgorithmus. Da in der Classmark-Change-Datenmeldung nur die Identifizierung des bereits vorher im Mobilfunknetz 2 verwendeten Verschlüsselungsalgorithmus angegeben wird, wird im Schritt S5 diese bereits vorher verwendete Identifizierung des Verschlüsselungsalgorithmus selektiert und vom Mobilfunknetz 2 im Schritt S6 mittels einer Ciphering-Mode-Command-Datenmeldung an das Mobilendgerät 1 übermittelt.

Das Mobilendgerät 1, insbesondere das funktionale Modul 14 des Mobilendgeräts 1, ist eingerichtet, im Schritt S7 zu überprüfen, ob die im Schritt S6 übermittelte Identifizierung des zu verwendenden Verschlüsselungsalgorithmus mit der im Datenspeicher 111 gespeicherten Identifizierung des Verschlüsselungsalgorithmus übereinstimmt. Das heisst, im Schritt S7 wird überprüft, ob der in der empfangenen Ciphering-Mode-Command-Datenmeldung angegebene Verschlüsselungsalgorithmus tatsächlich schon vorher im Mobilfunknetz 2 verwendet wurde und deshalb für das Mobilfunknetz 2 zulässig ist.

Falls die empfangene und die gespeicherte Identifizierung des Verschlüsselungsalgorithmus nicht übereinstimmen, gibt das funktionale Modul 14 einen Protokollfehler an und das Mobilendgerät 1 übermittelt im Schritt S8 beispielsweise eine Fehlermeldung an das Mobilfunknetz 2. Andernfalls stellt das Mobilendgerät 1 im Schritt S9, unter Verwendung des im Datenspeicher 111 gespeicherten kryptographischen Schlüssels und der im Datenspeicher 111 gespeicherten Identifizierung des vorher verwendeten Verschlüsselungsalgorithmus, eine Ciphering-Mode-Complete-Datenmeldung bereit und übermittelt die Ciphering-Mode-Complete-Datenmeldung im Schritt S10 an das Mobilfunknetz 2.

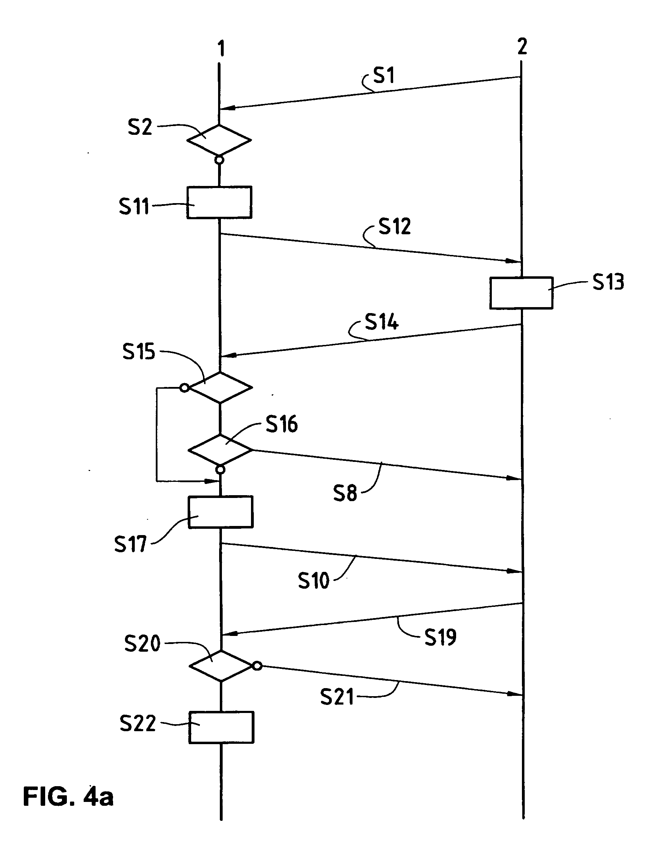

In den folgenden Abschnitten wird mit Bezug auf die Figur 4a eine erste Ausführungsvariante des Verfahrensablaufs für die Selektion eines Verschlüsselungsalgorithmus bei der Anbindung des Mobilendgeräts 1 an ein anderes neues Mobilfunknetz 2 beschrieben.

Das Mobilendgerät 1, insbesondere das funktionale Modul 13 des Mobilendgeräts 1, ist eingerichtet, bei der Anbindung des Mobilendgeräts 1 an ein neues Mobilfunknetz 2 im Schritt S11 sämtliche Verschlüsselungsalgorithmen zu bestimmen, die vom Mobilendgerät 1 unterstützt werden.

Im Schritt S12 übermittelt das funktionale Modul 13 des Mobilendgeräts 1 die im Schritt S11 bestimmten Identifizierungen der unterstützten Verschlüsselungsalgorithmen mittels einer Classmark-Change-Datenmeldung an das neue Mobilfunknetz 2.

Im Schritt S13 selektiert das neue Mobilfunknetz 2 auf Grund der im Schritt S12 übermittelten Classmark-Change-Datenmeldung den zu verwendenden Verschlüsselungsalgorithmus, der sowohl vom Mobilendgerät 1 als auch vom neuen Mobilfunknetz unterstützt wird. Im Schritt S14 übermittelt das neue Mobilfunknetz 2 die Identifizierung des zu verwendenden Verschlüsselungsalgorithmus mittels einer Ciphering-Mode-Command-Datenmeldung an das Mobilendgerät 1.

Das Mobilendgerät 1, insbesondere das funktionale Modul 14 des Mobilendgeräts 1, ist eingerichtet, im Schritt S15 zu überprüfen, ob die im Schritt S14 übermittelte Identifizierung des zu verwendenden Verschlüsselungsalgorithmus mit der im Datenspeicher 111 gespeicherten Identifizierung des Verschlüsselungsalgorithmus übereinstimmt. Das heisst, im Schritt S15 wird überprüft, ob der in der empfangenen Ciphering-Mode-Command-Datenmeldung angegebene Verschlüsselungsalgorithmus vom vorher verwendeten Verschlüsselungsalgorithmus abweicht und folglich vom neuen Mobilfunknetz 2 geändert wurde.

Falls der Verschlüsselungsalgorithmus nicht geändert wurde, das heisst, falls die empfangene und die gespeicherte Identifizierung des Verschlüsselungsalgorithmus übereinstimmen, fährt das funktionale Modul 14 im Schritt S17 fort.

Falls der Verschlüsselungsalgorithmus geändert wurde, das heisst, falls die empfangene und die gespeicherte Identifizierung des Verschlüsselungsalgorithmus nicht übereinstimmen, überprüft das funktionale Modul 14 im Schritt S16, ob der für das neue Mobilfunknetz 2 generierte kryptographische Schlüssel (respektive die entsprechende Zufallszahl) mit dem im Datenspeicher 111 gespeicherten kryptographischen Schlüssel (respektive Zufallszahl) übereinstimmt. Das heisst, im Schritt S16 wird überprüft, ob vom neuen Mobilfunknetz 2 der selbe bereits vorher verwendete kryptographische Schlüssel angegeben wurde.

Falls der kryptographische Schlüssel bereits vorher verwendet wurde gibt das funktionale Modul 14 im Schritt S16 einen Protokollfehler an und das Mobilendgerät 1 übermittelt im Schritt S8 beispielsweise eine Fehlermeldung an das neue Mobilfunknetz 2. Andernfalls fährt das funktionale Modul 14 im Schritt S 17 fort.

Im Schritt S17 speichert das funktionale Modul 14 die Informationen zur Identifizierung des neuen Mobilfunknetzes 2, die Identifizierung des im neuen Mobilfunknetz 2 zu verwendenden Verschlüsselungsalgorithmus und den vom neuen Mobilfunknetz 2 angegebenen kryptographischen Schlüssel im Zwischenspeicher 112. Zudem stellt das Mobilendgerät 1 im Schritt S17 eine Ciphering-Mode-Complete-Datenmeldung bereit und übermittelt die Ciphering-Mode-Complete-Datenmeldung im Schritt S10 an das neue Mobilfunknetz 2.

Im Schritt S20 überprüft das funktionale Modul 14, ob die erste im Schritt S19 vom neuen Mobilfunknetz 2 übermittelte Meldung im Mobilendgerät 1 erfolgreich entschlüsselt werden konnte. Falls die Meldung erfolgreich entschlüsselt werden konnte, kopiert das funktionale Modul 14 im Schritt S22 den im Schritt S17 im Zwischenspeicher 112 gespeicherten Inhalt in den Datenspeicher 111. Andernfalls, wenn die erste Meldung im Mobilendgerät 1 nicht erfolgreich entschlüsselt werden konnte, gibt das funktionale Modul 14 im Schritt S20 einen Protokollfehler an und das Mobilendgerät 1 übermittelt im Schritt S21 beispielsweise eine Fehlermeldung an das neue Mobilfunknetz 2.

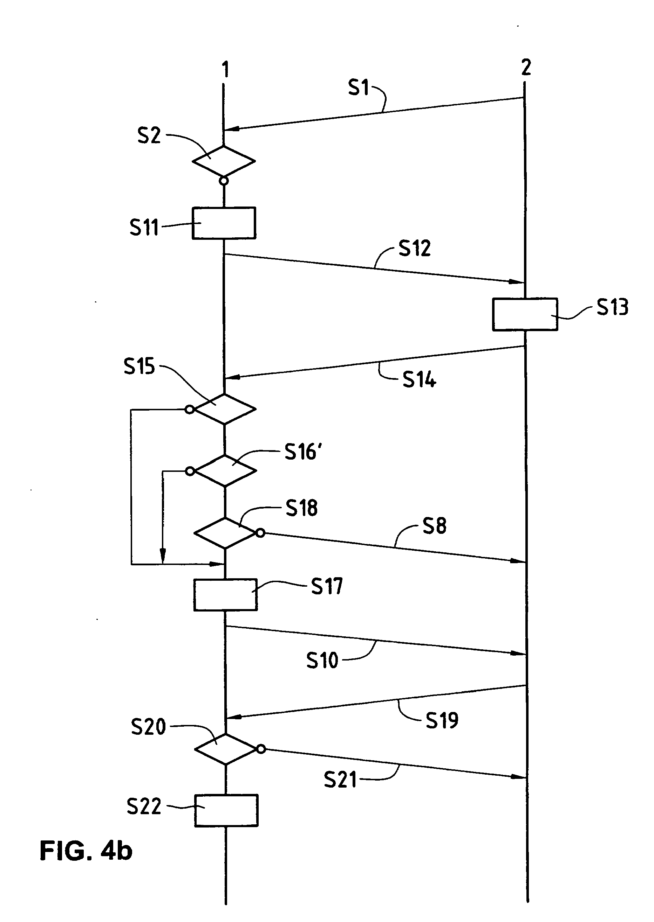

In den folgenden Abschnitten wird mit Bezug auf die Figur 4b eine zweite, bevorzugte Ausführungsvariante des Verfahrensablaufs für die Selektion eines Verschlüsselungsalgorithmus bei der Anbindung des Mobilendgeräts 1 an ein anderes neues Mobilfunknetz 2 beschrieben.

In der bevorzugten Ausführungsvariante gemäss Figur 4b, berücksichtigt das funktionale Modul 12 bei der Überprüfung, ob sich das Mobilendgerät 1 erneut an das selbe oder an ein neues Mobilfunknetz 2 anbindet, zur Identifizierung eines Mobilfunknetzes auch den Zugriffstechnologie-Typ.

Wie aus der Figur 4b ersichtlich ist, unterscheidet sich der Verfahrensablauf der Ausführungsvariante nach Figur 4b vom Verfahrensablauf der Ausführungsvariante nach Figur 4a dadurch, dass das funktionale Modul 14 nach dem Schritt S15 den Schritt S16' ausführt, wenn der Verschlüsselungsalgorithmus geändert wurde, das heisst, falls die empfangene und die gespeicherte Identifizierung des Verschlüsselungsalgorithmus nicht übereinstimmen.

Im Schritt S16' überprüft das funktionale Modul 14 wie im Schritt S16, ob vom neuen Mobilfunknetz 2 derselbe, bereits vorher verwendete kryptographische Schlüssel angegeben wurde. Falls der kryptographische Schlüssel bereits vorher verwendet wurde, gibt das funktionale Modul 14 jedoch im Schritt S16' keinen Protokollfehler an, sondern fährt im Schritt S18 fort. Andernfalls, wenn der kryptographische Schlüssel nicht bereits verwendet wurde, fährt das funktionale Modul 14 im Schritt S17 fort.

Im Schritt S18 überprüft das funktionale Modul 14, ob die im Schritt S2 erkannte Netzänderung auf Grund eines geänderten Zugriffstechnologie-Typs erfolgte. Das heisst, im Schritt S18 wird überprüft, ob der Ländercode und der Netzcode des Mobilfunknetzes, an das sich das Mobilendgerät anbindet, zwar mit dem Ländercode und dem Netzcode übereinstimmen, die im Zwischenspeicher 112 gespeichert sind, jedoch der Zugriffstechnologie-Typ des Mobilfunknetzes, an das sich das Mobilendgerät neu anbindet, vom Zugriffstechnologie-Typ abweicht, der im Zwischenspeicher 112 gespeichert ist. Nochmals anders ausgedrückt: im Schritt S18 wird überprüft, ob die Zugriffstechnologie innerhalb des selben Mobilfunknetzes 2 geändert hat, beispielsweise, weil sich das Mobilendgerät 1 vorher in einer GSM-Zelle befand und sich jetzt in einer UMTS-Zelle befindet.

Falls der Zugriffstechnologie-Typ im gleichen Mobilfunknetz 2 geändert hat, fährt das funktionale Modul 14 im Schritt S17 fort. Das heisst, die erneute Verwendung eines kryptographischen Schlüssels wird zugelassen, wenn die Zugriffstechnologie innerhalb des selben Mobilfunknetzes 2 geändert hat und beispielsweise an Stelle des vorher verwendeten GSM-Verschlüsselungsalgorithmus ein UMTS-Verschlüsselungsalgorithmus verwendet wird. Falls der Zugriffstechnologie-Typ nicht geändert hat, gibt das funktionale Modul 14 im Schritt S18 einen Protokollfehler an und das Mobilendgerät 1 übermittelt im Schritt S8 beispielsweise eine Fehlermeldung an das neue Mobilfunknetz 2.

Der Schritt S17 wird, wie oben mit Bezug zur Figur 4a beschrieben wurde, ausgeführt, wobei bei der Speicherung der Informationen zur Identifizierung des neuen Mobilfunknetzes 2 insbesondere auch der Zugriffstechnologie-Typ des neuen Mobilfunknetzes 2 gespeichert wird.

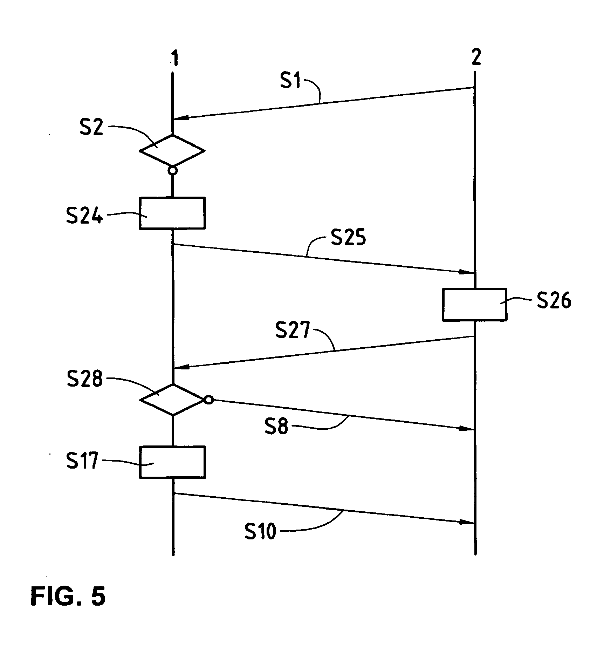

In den folgenden Abschnitten wird mit Bezug auf die Figur 5 eine dritte, nicht bevorzugte Ausführungsvariante des Verfahrensablaufs für die Selektion eines Verschlüsselungsalgorithmus bei der Anbindung des Mobilendgeräts 1 an ein anderes neues Mobilfunknetz 2 beschrieben.

In der nicht bevorzugten Ausführungsvariante gemäss Figur 5, ist das funktionale Modul 13 des Mobilendgeräts 1 eingerichtet, bei der Anbindung des Mobilendgeräts 1 an ein neues Mobilfunknetz 2 im Schritt S24 den zuletzt verwendeten Verschlüsselungsalgorithmus zu bestimmen, der im Datenspeicher 111 gespeichert ist.

Im Schritt S25 übermittelt das funktionale Modul 13 des Mobilendgeräts 1 die im Schritt S24 bestimmten Identifizierungen der zuletzt verwendeten Verschlüsselungsalgorithmen mittels einer Classmark-Change-Datenmeldung an das neue Mobilfunknetz 2.

Im Schritt S26 selektiert das Mobilfunknetz 2 auf Grund der im Schritt S25 übermittelten Classmark-Change-Datenmeldung den zu verwendenden Verschlüsselungsalgorithmus. Da in der Classmark-Change-Datenmeldung nur die Identifizierung des vom Mobilendgerät 1 zuletzt verwendeten Verschlüsselungsalgorithmus angegeben wird, wird im Schritt S26 diese zuletzt verwendete Identifizierung des Verschlüsselungsalgorithmus selektiert und vom Mobilfunknetz 2 im Schritt S27 mittels einer Ciphering-Mode-Command-Datenmeldung an das Mobilendgerät 1 übermittelt.

Das Mobilendgerät 1, insbesondere das funktionale Modul 14 des Mobilendgeräts 1, ist eingerichtet, im Schritt S28 zu überprüfen, ob die im Schritt S27 übermittelte Identifizierung des zu verwendenden Verschlüsselungsalgorithmus mit der im Datenspeicher 111 gespeicherten Identifizierung des Verschlüsselungsalgorithmus übereinstimmt. Das heisst, im Schritt S28 wir überprüft, ob der in der empfangenen Ciphering-Mode-Command-Datenmeldung angegebene Verschlüsselungsalgorithmus tatsächlich zuletzt vom Mobilendgerät 1 verwendet wurde und deshalb für das neue Mobilfunknetz 2 als zulässig erachtet wird.

Falls die empfangene und die gespeicherte Identifizierung des Verschlüsselungsalgorithmus nicht übereinstimmen, gibt das funktionale Modul 14 einen Protokollfehler an und das Mobilendgerät 1 übermittelt im Schritt S8 beispielsweise eine Fehlermeldung an das Mobilfunknetz 2. Andernfalls fährt das funktionale Modul 14 im Schritt S17 fort, der wie oben mit Bezug zur Figur 4a beschrieben, ausgeführt wird.

Das funktionale Modul 15 löscht die im Datenspeicher 111 gespeicherten Informationen zu bestimmten Zeitpunkten. Der Zeitpunkt wird beispielsweise durch das funktionale Module 15 bestimmt, indem es bei jedem Powerzyklus (Ein-/Ausschalten) oder bei jedem Ladezyklus (Batterieaufladen) einen Zähler erhöht, und den Löschvorgang auslöst, wenn eine definierte Anzahl Powerzyklen, zum Beispiel 10, oder Ladezyklen, zum Beispiel 20, erreicht wurde. Der Fachmann wird verstehen, dass der Löschzeitpunkt durch das funktionale Modul 15 auch periodisch festgesetzt werden kann, beispielsweise basierend auf einem internen Zeitsignal des Mobilendgeräts 1.

Abschliessend soll festgehalten werden, dass das beschriebene Verfahren sowohl für leitungsvermittelte (Circuit Switched) GSM-Netze als auch für paketvermittelte (Paket Switched) Dienste in drahtlosen Netzen und für UMTS-Netze anwendbar ist.

## Patentansprüche

1. Verfahren zur Selektion eines Verschlüsselungsalgorithmus beim Anbinden eines Mobilendgeräts (1) an ein Mobilfunknetz (2), umfassend:
Übermittlung einer ersten Datenmeldung (S4, S12, S25) vom Mobilendgerät (1) an das Mobilfunknetz (2), welche erste Datenmeldung Informationen zur Identifizierung der Verschlüsselungsalgorithmen umfasst, die vom Mobilendgerät (1) unterstützt werden,
Selektion eines zu verwendenden Verschlüsselungsalgorithmus (S5, S13, S26) durch das Mobilfunknetz (2) aus den Verschlüsselungsalgorithmen, die durch das Mobilendgerät (1) unterstützt werden, und
Übermittlung einer zweiten Datenmeldung (S6, S14, S27) vom Mobilfunknetz (2) an das Mobilendgerät (1), welche zweite Datenmeldung eine Identifizierung des selektierten zu verwendenden Verschlüsselungsalgorithmus umfasst,
**gekennzeichnet durch,**
Speicherung der Identifizierung (S22) des zu verwendenden Verschlüsselungsalgorithmus in einem Datenspeicher (111) im Mobilendgerät (1), zugeordnet zu Informationen zur Identifizierung des Mobilfunknetzes (2), und
bei einer nachfolgenden Anbindung des Mobilendgeräts (1) an das Mobilfunknetz (2) Überprüfung (S7, S15, S28), ob die im Datenspeicher (111) gespeicherte Identifizierung des zu verwendenden Verschlüsselungsalgorithmus mit der in der zweiten Datenmeldung vom Mobilfunknetz (2) an das Mobilendgerät (1) übermittelten Identifizierung des selektierten zu verwendenden Verschlüsselungsalgorithmus übereinstimmt.

2. Verfahren nach Anspruch 1, **dadurch gekennzeichnet, dass** die Identifizierung des zu verwendenden Verschlüsselungsalgorithmus zunächst in einem ersten Datenspeicher (112) im Mobilendgerät (1) zwischengespeichert (S17) wird, dass im Mobilendgerät (1) überprüft (S20) wird, ob im Mobilendgerät (1) eine vom Mobilfunknetz (2) empfangene Meldung unter Verwendung der im ersten Datenspeicher (111) zwischengespeicherten Informationen erfolgreich entschlüsselt wurde, dass die Identifizierung des zu verwendenden Verschlüsselungsalgorithmus erst nach erfolgreicher Entschlüsselung in einem zweiten Datenspeicher (111) im Mobilendgerät (1) gespeichert (S22) wird, und dass bei der nachfolgenden Anbindung des Mobilendgeräts (1) an das Mobilfunknetz (2) überprüft (S7, S15, S28) wird, ob die in der zweiten Datenmeldung vom Mobilfunknetz (2) an das Mobilendgerät (1) übermittelte Identifizierung des selektierten zu verwendenden Verschlüsselungsalgorithmus mit der im zweiten Datenspeicher (111) gespeicherten Identifizierung des zu verwendenden Verschlüsselungsalgorithmus übereinstimmt.

3. Verfahren nach einem der Ansprüche 1 oder 2, **dadurch gekennzeichnet, dass** die im Datenspeicher (111) gespeicherten Informationen zu einem Zeitpunkt gelöscht (S11) werden, der durch definierte Kriterien bestimmt wird.

4. Verfahren nach Anspruch 3, **dadurch gekennzeichnet, dass** der Zeitpunkt zum Löschen der im Datenspeicher (111) gespeichertem Informationen durch eine definierte Anzahl Powerzyklen oder Ladezyklen bestimmt wird.

5. Verfahren nach einem der Ansprüche 1 bis 4, **dadurch gekennzeichnet, dass** vor der Übermittlung der ersten Datenmeldung (S12) vom Mobilendgerät (1) an das Mobilfunknetz (2) im Mobilendgerät (1) auf Grund der im Datenspeicher (111) gespeicherten Informationen zur Identifizierung des Mobilfunknetzes (2) überprüft (S2) wird, ob sich das Mobilendgerät (1) an ein anderes neues Mobilfunknetz (2) anbindet, dass bei der Übermittlung der ersten Datenmeldung (S12) vom Mobilendgerät (1) an das neue Mobilfunknetz (2) in der ersten Datenmeldung sämtliche verfügbaren Verschlüsselungsalgorithmen als vom Mobilendgerät (1) unterstützt angegeben werden, und dass beim Empfang der zweiten Datenmeldung im Mobilendgerät (1) überprüft wird (S15), ob der vom neuen Mobilfunknetz (2) selektierte zu verwendende Verschlüsselungsalgorithmus vom vorher verwendeten Verschlüsselungsalgorithmus abweicht.

6. Verfahren nach Anspruch 5, **dadurch gekennzeichnet, dass** beim Anbinden des Mobilendgeräts (1) an ein Mobilfunknetz (2) vom Mobilfunknetz (2) eine dritte Datenmeldung an das Mobilendgerät (1) übermittelt wird, welche dritte Datenmeldung Daten zur Erzeugung eines kryptographischen Schlüssels umfasst, dass bei der Speicherung der Identifizierung (S17) des zu verwendenden Verschlüsselungsalgorithmus auch der erzeugte kryptographische Schlüssel im Datenspeicher (111) zugeordnet zu den Informationen zur Identifizierung des Mobilfunknetzes (2) gespeichert wird, und dass, wenn der vom neuen Mobilfunknetz (2) selektierte zu verwendende Verschlüsselungsalgorithmus vom vorher verwendeten Verschlüsselungsalgorithmus abweicht, im Mobilendgerät (1) überprüft (S16, S16') wird, ob ein neuer kryptographischer Schlüssel, der aus einer vom neuen Mobilfunknetz (2) empfangenen dritten Datenmeldung erzeugt wurde, mit dem im Datenspeicher (111) vorher gespeicherten kryptographischen Schlüssel übereinstimmt.

7. Verfahren nach einem der Ansprüche 1 bis 4, **dadurch gekennzeichnet, dass** vor der Übermittlung der ersten Datenmeldung (S25) vom Mobilendgerät (1) an das Mobilfunknetz (2) im Mobilendgerät (1) auf Grund der im Datenspeicher (111) gespeicherten Informationen zur Identifizierung des Mobilfunknetzes (2) überprüft (S2) wird, ob sich das Mobilendgerät (1) an ein anderes neues Mobilfunknetz (2) anbindet, dass bei der Übermittlung der ersten Datenmeldung (S25) vom Mobilendgerät (1) an das neue Mobilfunknetz (2) in der ersten Datenmeldung nur der zuletzt verwendete Verschlüsselungsalgorithmus als vom Mobilendgerät (1) unterstützt angegeben wird, und dass beim Empfang der zweiten Datenmeldung im Mobilendgerät (1) überprüft (S28) wird, ob der vom neuen Mobilfunknetz (2) selektierte zu verwendende Verschlüsselungsalgorithmus vom zuletzt verwendeten Verschlüsselungsalgorithmus abweicht.

8. Verfahren nach einem der Ansprüche 1 bis 7, **dadurch gekennzeichnet, dass** die Identifizierung des zu verwendenden Verschlüsselungsalgorithmus in einem fest mit dem Mobilendgerät (1) verbundenen Datenspeicher (111) gespeichert wird, und dass die im Datenspeicher (111) gespeicherten Informationen beim Verbinden eines neuen Identifizierungsmoduls mit dem Mobilendgerät (1) gelöscht werden.

9. Verfahren nach einem der Ansprüche 1 bis 7, **dadurch gekennzeichnet, dass** die Identifizierung des zu verwendenden Verschlüsselungsalgorithmus in einem Datenspeicher (111) gespeichert wird, der auf einem Identifizierungsmodul ausgeführt ist, das in das Mobilendgerät (1) eingeführt und entfernbar mit dem Mobilendgerät (1) verbunden ist.

10. Verfahren nach einem der Ansprüche 1 bis 9, **dadurch gekennzeichnet, dass** bei der Speicherung der Identifizierung (S17) des zu verwendenden Verschlüsselungsalgorithmus mit den Informationen zur Identifizierung des Mobilfunknetzes (2) zusätzlich ein Zugriffstechnologie-Typ des Mobilfunknetzes (2) im Datenspeicher (111) gespeichert wird.

11. Mobilendgerät (1) für Mobilfunknetze (2), welches Mobilendgerät (1) eingerichtet ist, beim Anbinden an ein Mobilfunknetz (2) eine erste Datenmeldung an das Mobilfunknetz (2) zu übermitteln, welche erste Datenmeldung Informationen zur Identifizierung von Verschlüsselungsalgorithmen umfasst, die vom Mobilendgerät (1) unterstützt werden, und welches Mobilendgerät (1) eingerichtet ist, vom Mobilfunknetz (2) eine zweite Datenmeldung zu empfangen, welche zweite Datenmeldung eine Identifizierung eines zu verwendenden Verschlüsselungsalgorithmus umfasst, welcher zu verwendende Verschlüsselungsalgorithmus durch das Mobilfunknetz (2) aus den durch das Mobilendgerät (1) unterstützten Verschlüsselungsalgorithmen selektiert wurde, **gekennzeichnet durch,**
Mittel zur Speicherung der Identifizierung des zu verwendenden Verschlüsselungsalgorithmus in einem Datenspeicher (111) im Mobilendgerät (1), zugeordnet zu Informationen zur Identifizierung des Mobilfunknetzes (2), und
Mittel zur Überprüfung bei einer nachfolgenden Anbindung des Mobilendgeräts (1) an das Mobilfunknetz (2), ob die im Datenspeicher (111) gespeicherte Identifizierung des zu verwendenden Verschlüsselungsalgorithmus mit der in der zweiten Datenmeldung vom Mobilfunknetz (2) an das Mobilendgerät (1) übermittelten Identifizierung des selektierten zu verwendenden Verschlüsselungsalgorithmus übereinstimmt.

12. Mobilendgerät (1) nach Anspruch 11, **dadurch gekennzeichnet, dass** die Mittel zur Speicherung der Identifizierung des zu verwendenden Verschlüsselungsalgorithmus eingerichtet sind die Identifizierung des zu verwendenden Verschlüsselungsalgorithmus zunächst in einem ersten Datenspeicher (112) im Mobilendgerät (1) zwischenzuspeichern, dass das Mobilendgerät (1) Mittel umfasst zum Überprüfen, ob im Mobilendgerät (1) eine vom Mobilfunknetz (2) empfangene Meldung unter Verwendung der im ersten Datenspeicher (111) zwischengespeicherten Informationen erfolgreich entschlüsselt wurde, dass die Mittel zur Speicherung der Identifizierung des zu verwendenden Verschlüsselungsalgorithmus eingerichtet sind die Identifizierung des zu verwendenden Verschlüsselungsalgorithmus erst nach erfolgreicher Entschlüsselung in einem zweiten Datenspeicher (111) im Mobilendgerät (1) zu speichern, und dass die Mittel zur Überprüfung bei der nachfolgenden Anbindung des Mobilendgeräts (1) an das Mobilfunknetz (2) eingerichtet sind, zum Überprüfen, ob die in der zweiten Datenmeldung vom Mobilfunknetz (2) an das Mobilendgerät (1) übermittelte Identifizierung des selektierten zu verwendenden Verschlüsselungsalgorithmus mit der im zweiten Datenspeicher (111) gespeicherten Identifizierung des zu verwendenden Verschlüsselungsalgorithmus übereinstimmt.

13. Mobilendgerät (1) nach einem der Ansprüche 11 oder 12, **gekennzeichnet durch** Mittel zum Löschen der im Datenspeicher (111) gespeichertem Informationen zu einem Zeitpunkt, der **durch** definierte Kriterien bestimmt ist.

14. Mobilendgerät (1) nach Anspruch 13, **gekennzeichnet durch** Mittel zum Bestimmen des Zeitpunkts zum Löschen der im Datenspeicher (111) gespeichertem Informationen auf Grund der Anzahl Powerzyklen oder Ladezyklen.

15. Mobilendgerät (1) nach einem der Ansprüche 11 bis 14, **gekennzeichnet durch** Mittel zum Überprüfen, vor der Übermittlung der ersten Datenmeldung an das Mobilfunknetz (2), auf Grund der im Datenspeicher (111) gespeicherten Informationen zur Identifizierung des Mobilfunknetzes (2), ob sich das Mobilendgerät (1) an ein anderes neues Mobilfunknetz (2) anbindet, **durch** Mittel zum Einfügen von Informationen zur identifizierung sämtlicher verfügbaren Verschlüsselungsalgorithmen in die erste Datenmeldung vor deren Übermittlung an das neue Mobilfunknetz (2), und **durch** Mittel zum Überprüfen beim Empfang der zweiten Datenmeldung, ob der vom neuen Mobilfunknetz (2) selektierte zu verwendende Verschlüsselungsalgorithmus vom vorher verwendeten Verschlüsselungsalgorithmus abweicht.

16. Mobilendgerät (1) nach Anspruch 15, **gekennzeichnet durch** Mittel zum Empfangen einer dritten Datenmeldung vom Mobilfunknetz (2), welche dritte Datenmeldung Daten zur Erzeugung eines kryptographischen Schlüssels umfasst, **durch** Mittel zum Speichern des erzeugten kryptographischen Schlüssels im Datenspeicher (111) zugeordnet zu den Informationen zur Identifizierung des Mobilfunknetzes (2) zusammen mit der Identifizierung des zu verwendenden Verschlüsselungsalgorithmus, und **durch** Mittel zum Überprüfen, wenn der vom neuen Mobilfunknetz (2) selektierte zu verwendende Verschlüsselungsalgorithmus vom vorher verwendeten Verschlüsselungsalgorithmus abweicht, ob ein neuer kryptographischer Schlüssel, der aus einer vom neuen Mobilfunknetz (2) empfangenen dritten Datenmeldung erzeugt wurde, mit dem im Datenspeicher (111) vorher gespeicherten kryptographischen Schlüssel übereinstimmt.

17. Mobilendgerät (1) nach einem der Ansprüche 11 bis 14, **gekennzeichnet durch** Mittel zum Überprüfen, vor der Übermittlung der ersten Datenmeldung an das Mobilfunknetz (2), auf Grund der im Datenspeicher (111) gespeicherten Informationen zur Identifizierung des Mobilfunknetzes (2), ob sich das Mobilendgerät (1) an ein anderes neues Mobilfunknetz (2) anbindet, **durch** Mittel zum Einfügen von Informationen zur Identifizierung des zuletzt verwendeten Verschlüsselungsalgorithmus als vom Mobilendgerät (1) unterstützt angegeben in die erste Datenmeldung vor deren Übermittlung an das neue Mobilfunknetz (2), und **durch** Mittel zum Überprüfen beim Empfang der zweiten Datenmeldung, ob der vom neuen Mobilfunknetz (2) selektierte zu verwendende Verschlüsselungsalgorithmus vom zuletzt verwendeten Verschlüsselungsalgorithmus abweicht.

18. Mobilendgerät (1) nach einem der Ansprüche 11 bis 17, **dadurch gekennzeichnet, dass** der Datenspeicher (111) zur Speicherung des zu verwendenden Verschlüsselungsalgorithmus fest mit dem Mobilendgerät (1) verbunden ist, und dass das Mobilendgerät (1) Mittel umfasst zum Löschen der im Datenspeicher (111) gespeicherten Informationen beim Verbinden eines neuen Identifizierungsmoduls mit dem Mobilendgerät (1).

19. Mobilendgerät (1) nach einem der Ansprüche 11 bis 17, **dadurch gekennzeichnet, dass** der Datenspeicher (111) zur Speicherung des zu verwendenden Verschlüsselungsalgorithmus auf einem ldentifizierungsmodul ausgeführt ist, das in das Mobilendgerät (1) eingeführt und entfernbar mit dem Mobilendgerät (1) verbunden ist.

20. Mobilendgerät (1) nach einem der Ansprüche 11 bis 19, **gekennzeichnet durch** Mittel zum Speichern der Informationen zur Identifizierung des Mobilfunknetzes (2) im Datenspeicher (111) zusammen mit einem Zugriffstechnologie-Typ.

## Claims

1. A method of selecting an encryption algorithm on connection of a mobile terminal (1) to a mobile radio network (2), comprising:
transmission of a first data message (S4, S12, S25) from the mobile terminal (1) to the mobile radio network (2), which first data message includes information for identifying the encryption algorithms which are supported by the mobile terminal (1),
selection by the mobile radio network(2) of an encryption algorithm (S5, S13, S26) to be used from the encryption algorithms which are supported by the mobile terminal (1), and
transmission of a second data message (S6, S14, S27) from the mobile radio network (2) to the mobile terminal (1), which second data message includes an identifier of the selected encryption algorithm to be used,
**characterised by**
storing the identifier (S22) of the encryption algorithm to be used in a data memory (111) in the mobile terminal (1), assigned to information for identifying the mobile radio network (2), and
on subsequent connection of the mobile terminal (1) to the mobile radio network (2), checking (S7, S15, S28) whether the identifier, stored in the data memory (111), of the encryption algorithm to be used matches the identifier, transmitted in the second data message from the mobile radio network (2) to the mobile terminal (1), of the selected encryption algorithm to be used.

2. A method according to claim 1, **characterised in that** the identifier of the encryption algorithm to be used is firstly buffered (S17) in a first data memory (112) in the mobile terminal (1), **in that** checking (S20) is performed in the mobile terminal (1) as to whether a message received from the mobile radio network (2) has been successfully encrypted in the mobile terminal (1) using the information buffered in the first data memory (111), **in that** the identifier of the encryption algorithm to be used is stored in a second data memory (111) in the mobile terminal (1) only after successful encryption, and **in that**, on subsequent connection of the mobile terminal (1) to the mobile radio network (2), checking (S7, S15, S28) is performed as to whether the identifier, transmitted in the second data message from the mobile radio network (2) to the mobile terminal (1), of the selected encryption algorithm to be used matches the identifier, stored in the second data memory (111), of the encryption algorithm to be used.

3. A method according to one of claims 1 or 2, **characterised in that** the information stored in the data memory (111) is deleted (S11) at a moment determined by defined criteria.

4. A method according to claim 3, **characterised in that** the moment for deletion of the information stored in the data memory (111) is determined by a defined number of power cycles or charging cycles.

5. A method according to one of claims 1 to 4, **characterised in that**, prior to transmission of the first data message (S12) from the mobile terminal (1) to the mobile radio network (2), checking (S2) is performed in the mobile terminal (1), on the basis of the information stored in the data memory (111) for identifying the mobile radio network (2), as to whether the mobile terminal (1) is connected to another new mobile radio network (2), **in that**, on transmission of the first data message (S12) from the mobile terminal (1) to the new mobile radio network (2), all the available encryption algorithms are indicated in the first data message as supported by the mobile terminal (1), and **in that**, on receipt of the second data message, checking (S15) is performed in the mobile terminal (1) as to whether the encryption algorithm selected by the new mobile radio network (2) and to be used differs from the previously used encryption algorithm.

6. A method according to claim 5, **characterised in that**, on connection of the mobile terminal (1) to a mobile radio network (2), a third data message is transmitted from the mobile radio network (2) to the mobile terminal (1), which third data message includes data for generating a cryptographic key, **in that**, on storing the identifier (S17) of the encryption algorithm to be used, the cryptographic key generated is also stored in the data memory (111) assigned to the information for identifying the mobile radio network (2), and **in that**, if the encryption algorithm selected by the new mobile radio network (2) and to be used differs from the previously used encryption algorithm, checking (S16, S16') is performed in the mobile terminal (1) as to whether a new cryptographic key, which has been generated from a third data message received from the new mobile radio network (2), matches the cryptographic key previously stored in the data memory (111).

7. A method according to one of claims 1 to 4, **characterised in that**, prior to transmission of the first data message (S25) from the mobile terminal (1) to the mobile radio network (2), checking (S2) is performed in the mobile terminal (1), on the basis of the information stored in the data memory (111) for identifying the mobile radio network (2), as to whether the mobile terminal (1) is connected to another new mobile radio network (2), **in that**, on transmission of the first data message (S25) from the mobile terminal (1) to the new mobile radio network (2), only the most recently used encryption algorithm is indicated in the first data message as supported by the mobile terminal (1), and **in that**, on receipt of the second data message, checking (S28) is performed in the mobile terminal (1) as to whether the encryption algorithm selected by the new mobile radio network (2) and to be used differs from the most recently used encryption algorithm.

8. A method according to one of claims 1 to 7, **characterised in that** the identifier of the encryption algorithm to be used is stored in a data memory (111) connected in a fixed manner to the mobile terminal (1), and **in that** the information stored in the data memory (111) is deleted on connection of a new identification module to the mobile terminal (1).

9. A method according to one of claims 1 to 7, **characterised in that** the identifier of the encryption algorithm to be used is stored in a data memory (111), which is implemented on an identification module which is introduced into the mobile terminal (1) and connected removably to the mobile terminal (1).

10. A method according to one of claims 1 to 9, **characterised in that**, on storing the identifier (S17) of the encryption algorithm to be used, an access technology type of the mobile radio network (2) is additionally stored in the data memory (111) with the information for identifying the mobile radio network (2).

11. A mobile terminal (1) for mobile radio networks (2), which mobile terminal (1) is set up to transmit a first data message to the mobile radio network (2) on connection to a mobile radio network (2), which first data message includes information for identifying encryption algorithms which are supported by the mobile terminal (1), and which mobile terminal (1) is set up to receive a second data message from the mobile radio network (2), which second data message includes an identifier of an encryption algorithm to be used, which encryption algorithm to be used has been selected by the mobile radio network (2) from the encryption algorithms supported by the mobile terminal (1), **characterised by**
means for storing the identifier of the encryption algorithm to be used in a data memory (111) in the mobile terminal (1), assigned to information for identifying the mobile radio network (2), and
means for checking, on subsequent connection of the mobile terminal (1) to the mobile radio network (2), whether the identifier stored in the data memory (111) of the encryption algorithm to be used matches the identifier, transmitted in the second data message from the mobile radio network (2) to the mobile terminal (1), of the selected encryption algorithm to be used.

12. A mobile terminal (1) according to claim 11, **characterised in that** the means for storing the identifier of the encryption algorithm to be used are set up to buffer the identifier of the encryption algorithm to be used firstly in a first data memory (112) in the mobile terminal (1), **in that** the mobile terminal (1) comprises means for checking whether a message received from the mobile radio network (2) has been successfully encrypted in the mobile terminal (1) using the information buffered in the first data memory (111), **in that** the means for storing the identifier of the encryption algorithm to be used are set up to store the identifier of the encryption algorithm to be used in a second data memory (111) in the mobile terminal (1) only after successful encryption, and **in that** the means for checking, on subsequent connection of the mobile terminal (1) to the mobile radio network (2), are set up to check whether the identifier, transmitted in the second data message from the mobile radio network (2) to the mobile terminal (1), of the selected encryption algorithm to be used, matches the identifier, stored in the second data memory (111), of the encryption algorithm to be used.

13. A mobile terminal (1) according to one of claims 11 or 12, **characterised by** means for deleting the information stored in the data memory (111) at a moment determined by defined criteria.

14. A mobile terminal (1) according to claim 13, **characterised by** means for determining the moment for deletion of the information stored in the data memory (111) on the basis of the number of power cycles or charging cycles.

15. A mobile terminal (1) according to one of claims 11 to 14, **characterised by** means for checking, prior to transmission of the first data message (S12) to the mobile radio network (2), on the basis of the information stored in the data memory (111) for identifying the mobile radio network (2), whether the mobile terminal (1) is connected to another new mobile radio network (2), by means for inserting information for identifying all the available encryption algorithms into the first data message prior to transmission thereof to the new mobile radio network (2), and by means for checking, on receipt of the second data message, whether the encryption algorithm selected by the new mobile radio network (2) and to be used differs from the previously used encryption algorithm.

16. A mobile terminal (1) according to claim 15, **characterised by** means for receiving a third data message from the mobile radio network (2), which third data message includes data for generating a cryptographic key, by means for storing the generated cryptographic key in the data memory (111) assigned to the information for identifying the mobile radio network (2) together with the identifier of the encryption algorithm to be used, and by means for checking, if the encryption algorithm selected by the new mobile radio network (2) and to be used differs from the previously used encryption algorithm, whether a new cryptographic key, which has been generated from a third data message received from the new mobile radio network (2), matches the cryptographic key previously stored in the data memory (111).

17. A mobile terminal (1) according to one of claims 11 to 14, **characterised by** means for checking, prior to transmission of the first data message to the mobile radio network (2), on the basis of the information stored in the data memory (111) for identifying the mobile radio network (2), whether the mobile terminal (1) is connected to another new mobile radio network (2), by means for inserting information for identifying the most recently used encryption algorithm indicated as supported by the mobile terminal (1) into the first data message prior to transmission thereof to the new mobile radio network (2), and by means for checking, on receipt of the second data message, whether the encryption algorithm selected by the new mobile radio network (2) and to be used differs from the most recently used encryption algorithm.

18. A mobile terminal (1) according to one of claims 11 to 17, **characterised in that** the data memory (111) for storing the encryption algorithm to be used is connected in fixed manner to the mobile terminal (1), and **in that** the mobile terminal (1) comprises means for deleting the information stored in the data memory (111) on connection of a new identification module to the mobile terminal (1).

19. A mobile terminal (1) according to one of claims 11 to 17, **characterised in that** the data memory (111) for storing the encryption algorithm to be used is implemented on an identification module which is introduced into the mobile terminal (1) and connected removably to the mobile terminal (1).

20. A mobile terminal (1) according to one of claims 11 to 19, **characterised by** means for storing the information for identifying the mobile radio network (2) in the data memory (111) together with an access technology type.

## Revendications

1. Procédé de sélection d'un algorithme de chiffrage lors d'une liaison d'un terminal mobile (1) à un réseau mobile (2), comprenant :
la transmission d'un premier message de données (S4, S12, S25) du terminal mobile (1) au réseau mobile (2), ce premier message de données comportant des informations pour l'identification des algorithmes de chiffrage, qui sont pris en charge par le terminal mobile (1),
la sélection d'un algorithme de chiffrage à utiliser (S5, S13, S26) par le réseau mobile (2) parmi les algorithmes de chiffrage, qui sont pris en charge par le terminal mobile (1), et
la transmission d'un second message de données (S6, S14, S27) du réseau mobile (2) au terminal mobile (1), ce second message de données comprenant une identification de l'algorithme de cryptage à utiliser sélectionné,
**caractérisé par**,
la mémorisation de l'identification (S22) de l'algorithme de chiffrage à utiliser dans une mémoire de données (111) dans le terminal mobile (1), associée à des informations pour identifier le réseau mobile (2), et
lors d'une liaison suivante du terminal mobile (1) au réseau mobile (2), la vérification (S7, S15, S28), si l'identification de l'algorithme de chiffrage à utiliser mémorisée dans la mémoire de données (111) correspond à l'identification de l'algorithme de chiffrage à utiliser sélectionné transmise dans le second message de données du réseau mobile (2) au terminal mobile (1).

2. Procédé selon la revendication 1, **caractérisé en ce que** l'identification de l'algorithme de chiffrage à utiliser est tout d'abord mise en mémoire tampon (S17) dans une première mémoire de données (112) dans le terminal mobile (1), **en ce qu'**il est vérifié (S20) dans le terminal mobile (1), si un message reçu depuis le réseau mobile (2) est déchiffré avec succès en utilisant les informations mises en mémoire tampon dans la première mémoire de données (111) dans le terminal mobile (1), **en ce que** l'identification de l'algorithme de chiffrage à utiliser est mémorisée (S22) dans le terminal mobile (1) dans une seconde mémoire de données (111) après un déchiffrage réussi, et **en ce que**, lors de la liaison suivante du terminal mobile (1) au réseau mobile (2), il est vérifié (S7, S15, S28), si l'identification de l'algorithme de chiffrage à utiliser sélectionné transmise dans le second message de données du réseau mobile (2) au terminal mobile (1) correspond à l'identification de l'algorithme de chiffrage à utiliser mémorisée dans la seconde mémoire de données (111).

3. Procédé selon l'une des revendications 1 ou 2, **caractérisé en ce que** les informations mémorisées dans une mémoire de données (111) sont effacées (S11) à un moment, qui est déterminé par des critères définis.

4. Procédé selon la revendication 3, **caractérisé en ce que** le moment de l'effacement des informations mémorisées dans la mémoire de données (111) est déterminé par un nombre défini de cycles d'énergie ou de cycles de charge.

5. Procédé selon l'une des revendications 1 à 4, **caractérisé en ce que**, avant la transmission du premier message de données (S12) du terminal mobile (1) au réseau mobile (2), il est vérifié (S2) dans le terminal mobile (1) en raison des informations mémorisées dans la mémoire de données (111) pour l'identification du réseau mobile (2), si le terminal mobile (1) est relié à un autre réseau mobile (2), **en ce que** lors de la transmission du premier message de données (S12) du terminal mobile (1) au nouveau réseau mobile (2), tous les algorithmes de chiffrage disponibles sont annoncés dans le premier message de données comme étant pris en charge par le terminal mobile (1), et **en ce que**, lors de la réception du second message de données, il est vérifié (S15) dans le terminal mobile (1), si l'algorithme de chiffrage à utiliser sélectionné par le nouveau réseau mobile (2) s'écarte de l'algorithme de chiffrage utilisé précédemment.

6. Procédé selon la revendication 5, **caractérisé en ce que**, lors de la liaison du terminal mobile (1) au réseau mobile (2), un troisième message de données est transmis depuis le réseau mobile (2) au terminal mobile (1), ce troisième message de données comprenant des données pour générer une clé cryptographique, **en ce que**, lors de la mémorisation de l'identification (S17) de l'algorithme de chiffrage à utiliser, la clé cryptographique générée est mémorisée dans la mémoire de données (111) associée à l'information pour l'identification du réseau mobile (2), et **en ce que**, lorsque l'algorithme de chiffrage à utiliser sélectionné par le nouveau réseau mobile (2) s'écarte de l'algorithme de chiffrage utilisé préalablement, il est vérifié (S16, S16') dans le terminal mobile (1), si une nouvelle clé cryptographique, qui est générée à partir du troisième message de données reçu par le nouveau réseau mobile (2), correspond à la clé cryptographique mémorisée préalablement dans la mémoire de données (111).

7. Procédé selon l'une des revendications 1 à 4, **caractérisé en ce que**, avant la transmission du premier message de données (S25) du terminal mobile (1) au réseau mobile (2), il est vérifié (S2) dans le terminal mobile (1) en raison des informations mémorisées dans la mémoire de données (111) pour l'identification du réseau mobile (2), si le terminal mobile (1) est relié à un autre réseau mobile (2), **en ce que**, lors de la transmission du premier message de données (S25) du terminal mobile (1) au nouveau réseau mobile (2), l'algorithme de chiffrage utilisé en dernier est annoncé dans le premier message de données comme étant pris en charge par le terminal mobile (1), et **en ce que**, lors de la réception du second message de données, il est vérifié (S28) dans le terminal mobile (1), si l'algorithme de chiffrage à utiliser sélectionn2 par le nouveau réseau mobile (2) s'écarte de l'algorithme de chiffrage utilisé en dernier.

8. Procédé selon l'une des revendications 1 à 7, **caractérisé en ce que** l'identification de l'algorithme de chiffrage à utiliser est mémorisée dans une mémoire de données (111) reliée de façon fixe avec le terminal mobile (1), et **en ce que** les informations mémorisées dans la mémoire de données (111) sont effacées lors d'une liaison d'un nouveau module d'identification avec le terminal mobile (1).

9. Procédé selon l'une des revendications 1 à 7, **caractérisé en ce que** l'identification de l'algorithme de chiffrage à utiliser est mémorisée dans une mémoire de données (111), qui est réalisée sur un module d'identification, qui est mis en place dans le terminal mobile (1) et est relié à distance avec le terminal mobile (1).

10. Procédé selon l'une des revendications 1 à 9, **caractérisé en ce que**, lors de la mémorisation de l'identification (S17) de l'algorithme de chiffrage à utiliser, un type de technologie d'accès du réseau mobile (2) est mémorisé en plus dans la mémoire de données (111) avec les informations pour l'identification du réseau mobile (2) .

11. Terminal mobile (1) pour des réseaux mobiles (2), le terminal mobile (1) étant agencé pour transmettre lors d'une liaison à un réseau mobile (2) un premier message de données au réseau mobile (2), ce premier message de données comprenant des informations pour identifier les algorithmes de chiffrage, qui sont pris en charge par le terminal mobile (1), et ce terminal mobile (1) étant agencé pour recevoir depuis le réseau mobile (2) un second message de données, ce second message de données comprenant une identification d'un algorithme de chiffrage à utiliser, cet algorithme de chiffrage à utiliser étant sélectionné par le réseau mobile (2) parmi les algorithmes de chiffrage pris en charge par le terminal mobile (1), **caractérisé par**,
des moyens pour mémoriser l'identification de l'algorithme de chiffrage à utiliser dans une mémoire de données (111) dans le terminal mobile (1), associée aux informations pour identifier le réseau mobile (2), et
des moyens pour vérifier lors d'une liaison suivante du terminal mobile (1) au réseau mobile (2), si l'identification de l'algorithme de chiffrage à utiliser mémorisée dans la mémoire de données (111) correspond à l'identification de l'algorithme de chiffrage à utiliser sélectionné transmise dans le second message de données du réseau mobile (2) au terminal mobile (1).

12. Terminal mobile (1) selon la revendication 11, **caractérisé en ce que** les moyens pour mémoriser l'identification de l'algorithme de chiffrage à utiliser sont agencés pour mettre en mémoire tampon l'identification de l'algorithme de chiffrage à utiliser tout d'abord dans une première mémoire de données (112) dans le terminal mobile (1), **en ce que** le terminal mobile (1) comprend des moyens pour vérifier, si un message reçu depuis le réseau mobile (2) a été déchiffré avec succès dans le terminal mobile (1) en utilisant les informations mises en mémoire tampon dans la première mémoire de données (111), **en ce que** les moyens pour mémoriser l'identification de l'algorithme de chiffrage à utiliser sont agencés pour mémoriser l'identification de l'algorithme de chiffrage à utiliser dans une seconde mémoire de données (111) dans le terminal mobile (1) après un déchiffrage réussi, et **en ce que** les moyens pour vérifier lors de la liaison suivante du terminal mobile (1) au réseau mobile (2) sont agencés pour vérifier si l'identification de l'algorithme de chiffrage à utiliser sélectionné transmise dans le second message de données du réseau mobile (2) au terminal mobile (1) correspond à une identification de l'algorithme de chiffrage à utiliser mémorisée dans la seconde mémoire de données (111).

13. Terminal mobile (1) selon l'une des revendications 11 ou 12, **caractérisé par** des moyens pour effacer les informations mémorisées dans la mémoire de données (111) à un moment, qui est déterminé par des critères définis.

14. Terminal mobile (1) selon la revendication 13, **caractérisé par** des moyens pour déterminer le moment pour effacer les informations mémorisées dans la mémoire de données (111) en raison du nombre de cycles d'énergie ou de cycles de charge.

15. Terminal mobile (1) selon l'une des revendications 11 à 14, **caractérisé par** des moyens pour vérifier, avant la transmission du premier message de données au réseau mobile (2), en raison des informations mémorisées dans la mémoire de données (111) pour identifier le réseau mobile (2), si le terminal mobile (1) est relié à un autre réseau mobile (2), par des moyens pour insérer des informations pour identifier tous les algorithmes de chiffrage disponibles dans le premier message de données avant sa transmission au nouveau réseau mobile (2), et par des moyens pour vérifier lors de la réception du second message de données, si l'algorithme de chiffrage à utiliser sélectionné par le nouveau réseau mobile (2) s'écarte de l'algorithme de chiffrage utilisé précédemment.

16. Terminal mobile (1) selon la revendication 15, **caractérisé par** des moyens pour recevoir un troisième message de données depuis le réseau mobile (2), ce troisième message de données comprenant des données pour générer une clé cryptographique, par des moyens pour mémoriser la clé cryptographique générée dans la mémoire de données (111) associée aux informations pour identifier le réseau mobile (2) conjointement avec l'identification de l'algorithme de chiffrage à utiliser, et par des moyens pour vérifier, lorsque l'algorithme de chiffrage à utiliser sélectionné par le nouveau réseau mobile (2) s'écarte de l'algorithme de chiffrage utilisé précédemment, si une nouvelle clé cryptographique, qui est générée à partir d'un troisième message de données reçu qui par le nouveau réseau mobile (2), correspond à la clé cryptographique mémorisée précédemment dans la mémoire de données (111).

17. Terminal mobile (1) selon l'une des revendications 11 à 14, **caractérisé par** des moyens pour vérifier, avant la transmission du premier message de données au réseau mobile (2), en raison des informations mémorisées dans la mémoire de données (111) pour identifier le réseau mobile (2), si le terminal mobile (1) est relié à un autre réseau mobile (2), par des moyens pour insérer des informations pour identifier l'algorithme de chiffrage utilisé en dernier annoncé comme étant pris en charge par le terminal mobile (1) dans le premier message de données avant sa transmission au nouveau réseau mobile (2), et par des moyens pour vérifier lors de la réception du second message de données, si l'algorithme de chiffrage à utiliser sélectionn2 par le nouveau réseau mobile (2) s'écarte de l'algorithme de chiffrage utilisé en dernier.

18. Terminal mobile (1) selon l'une des revendications 11 à 17, **caractérisé en ce que** la mémoire de données (111) pour mémoriser l'algorithme de chiffrage à utiliser est reliée de façon fixe au terminal mobile (1), et **en ce que** le terminal mobile (1) comprend des moyens pour effacer les informations mémorisées dans la mémoire de données (111) lors d'une liaison d'un nouveau module d'identification avec le terminal mobile (1).

19. Terminal mobile (1) selon l'une des revendications 11 à 17, **caractérisé en ce que** la mémoire de données (111) pour mémoriser l'algorithme de chiffrage à utiliser est réalisée dans un module d'identification, qui est mis en place dans le terminal mobile (1) et est relié à distance avec le terminal mobile (1).

20. Terminal mobile (1) selon l'une des revendications 11 à 19, **caractérisé par** des moyens pour mémoriser les informations afin d'identifier le réseau mobile (2) dans la mémoire de données (111) conjointement avec un type de technologie d'accès.
